# EUROPEAN PATENT APPLICATION

(11) **EP 1 420 352 A1**
(43) Date of publication of application: **19.05.2004**
(21) Application number: 03104233.6
(22) Date of filing: 17.11.2003
(51) Int. Cl.: G06F 17/60

(54) **Advertisement effect analyzing method and advertising system**

(30) Priority: 18.11.2002 JP 2002333471
(71) Applicant: Nippon Telegraph and Telephone Corporation, Tokyo (JP)
(72) Inventor: HAYASHI, Hitoshi, TOKYO (JP); SHIMIZU, Masashi, TOKYO (JP); TSUBAKI, Toshimitsu, TOKYO (JP)
(74) Representative: Poulin, Gérard

(57) **Abstract**

An inputting terminal transmits encoded advertisement type information. A server receives the advertisement type information from the inputting terminal and stores the number of encoded advertisement type information receipts. A computer 20 calculates an advertisement effect according to the number of receipts and calculates an advertisement fee according to the calculated advertisement effect. By doing this, it is possible to provide an advertisement effect analyzing method having a function in which it is possible to understand the advertisement effect quantitatively and calculate the incentive according to the increase in the viewers of the advertisement by receiving information directly from the viewers that indicates that the viewer acknowledged the advertisement.

## Description

### BACKGROUND OF THE INVENTION

### Field of the Invention

The present invention relates to a computer system. In particular, the present invention relates to a method for analyzing the effect of advertising.

Priority is claimed on Japanese Patent Application No. 2002-333471, filed November 18, 2002, the content of which is incorporated herein by reference.

### Description of Related Art

In recent years, corporations (advertisement client) that have their own home pages on the Internet have been posting banner advertisements on other home pages that may be browsed by numerous advertisement viewers so as to attract as many advertisements viewers as possible. If such advertisement viewers click on a banner advertisement shown on a browsing display on the Internet, the home page of the client corporation that is advertised and linked to the banner advertisement is displayed on the viewer's personal computer, or on a mobile information terminal. In such cases, the advertising cost for showing the banner advertisement on the Internet is determined according to the click count (pv: page view) on the banner advertisement by advertisement viewers. Therefore, the higher the click count is on the banner advertisement on the Internet, the higher the advertising cost becomes. The advertisement client pays the cost for the banner advertisement to an agent for the banner advertisement, who handles the management for the banner advertisement according to the click count. Thus, the party that handles the banner advertisement searches for as many popularly browsed home pages as possible so as to post banner advertisements in a more preferable position. By doing this, the click count may increase; thus, it is possible to make fees from the advertisement client greater. Also, the advertisement client should only pay fees according to the click count for the banner advertisement; therefore, it is possible for the advertisement client to order the advertisement more efficiently from a cost effectiveness point of view (see page 2 in Japanese Unexamined Patent Application, First Publication No. 2002-245339).

On the other hand, advertisements in TV (television) broadcasting, newspapers, and trains are posted to numerous people anonymously. In such cases, the advertisement fee is determined in advance not according to numeral information on the number of viewers for the advertisement such as program rating, number of subscribers, and number of passengers, but to advertising place and advertising time. In this case, in contrast to cases in which it is possible to specify the number of advertisement viewers, there is a problem in that it is difficult to determine the numerical effect of advertisements that use information other than numerical data that can specify the number of advertisement viewers. Thus, the advertising fee is determined in advance only by information other than numerical data that can specify the number of viewers for advertisements such as the program rating, the number of subscribers, and the number of passengers. Therefore, it has been difficult for advertisement agents to maintain their motivation on as high a level as their marketing efforts, even if they were able to increase the number through their efforts. Also, it has not been possible to determine the actual extent to which their advertisements have affected the viewers. Therefore, there is a problem in that it is difficult to promote marketing efforts efficiently from a cost effectiveness point of view.

### SUMMARY OF THE INVENTION

One of the goals of the present invention is to provide a means of analyzing the effect of advertisements and advertisement systems that will make it possible to determine the effect of advertisements numerically; by receiving information that indicates that the advertisement viewers actually saw the advertisement under the condition that the advertisement fee was calculated according to information other than numerical data for specifying the number of viewers such as program rating, number of subscribers, and number of passengers. Another goal is to realize a function by which it' is possible to calculate incentive based on an increase in the number of advertisement viewers.

According to the present invention, a method for analyzing the effect of an advertisement in an advertisement system provided with terminals and an advertisement effect analyzing device, comprises the steps of transmitting information pertaining to encoded advertisement type information, receiving the encoded advertisement type information from the terminals in the advertisement effect analyzing device, storing the number of receipts for the encoded advertisement type information for each type in the advertisement effect analyzing device, calculating the advertisement effect based on the number of receipts of the encoded advertisement type information in the advertisement effect analyzing device, and calculating advertisement fees based on the calculated advertisement effect in the advertisement effect analyzing device.

By doing this, the terminals transmit the encoded advertisement type information, and the advertisement effect analyzing device receives the encoded advertisement type information from the terminals such that the number of the advertisement type information receipts is stored. Consequently, the advertisement effect analyzing device calculates advertisement effect based on the number of receipts so as to calculate fees for advertisements based on the calculated advertisement effect.

By doing this, information that indicates that the viewers of the advertisement view the advertisement is received directly in cases in which an advertisement is posted which advertisement fees are calculated not according to numeral information on the number of viewers for the advertisement such as program rating, number of subscribers, and number of passengers. Therefore, it is possible to calculate the advertisement effect numerically and calculate the incentive based on an increase in the number of advertisement viewers.

Also, according to the present invention, a method for analyzing the effect of an advertisement in an advertisement system provided with an information transmitting device with a storing section for encoded advertisement type information, terminals, and an advertisement effect analyzing device, comprises the steps of transmitting information pertaining to the encoded advertisement type information stored in the storing section by the information transmitting device, receiving the encoded advertisement type information from the information transmitting device by the advertisement effect analyzing device, storing the number of receipts of the encoded advertisement type information for each type in the advertisement effect analyzing device, calculating the advertisement effect based on the number of receipts of the encoded advertisement type in the advertisement effect analyzing device, and calculating advertisement fees based on the calculated advertisement effect in the advertisement effect analyzing device.

Also, a method for analyzing the effect of an advertisement further comprises the step of calculating preferable conditions for posting the advertisement according to the effect of the previous advertisement and the advertisement fees.

By doing this, it is possible to calculate desirable advertising conditions numerically for posting the advertisement according to the advertisement type viewed by the viewers of the advertisement.

Also, according to the present invention, a method for analyzing the effect of an advertisement further comprises the steps of reading out a type of contents in advertisement type information that corresponds to the encoded advertisement information received in the above receiving step by the advertisement effect analyzing device from an advertisement type information construing table in which an information type that corresponds to the encoded advertisement type information and access information are stored, transmitting the contents in the advertisement to a search engine by the advertisement effect analyzing device, receiving information concerning the contents in the advertisement from the search engine by the advertisement effect analyzing device, and transmitting the information concerning the contents in the advertisement to the terminals by the advertisement effect analyzing device. By doing this, it is possible easily to compare conditions in the present advertisement and conditions for another advertisement from a service point of view by accessing an inquiry address by using the access information; thus, it is possible to realize a higher advertisement function.

Also, a method for analyzing the effect of an advertisement using a barcode reading section in the terminals further comprises the step of reading barcode information that are the advertisement type information by the barcode reading section in the terminals.

Also, a method for analyzing the effect of an advertisement further comprises the step of transmitting the advertisement type information via wireless communication by a wireless transmitting device provided in an advertisement medium, and receiving the advertisement type information by a wireless receiving device provided in the terminals.

Also, a method for analyzing the effect of an advertisement using a barcode reading section in the information transmitting device further comprises the step of reading the barcode information displayed in the terminals by the barcode reading section in the information transmitting device, and transmitting the advertisement type information stored in the storing section when the barcode is read.

Also, a method for analyzing the effect of an advertisement further comprises the step of transmitting transmission start information via wireless communication by the wireless communicating device provided with the terminals, receiving the transmission start information by the wireless communicating device provided in the advertisement medium, and transmitting the advertisement type information stored in the storing section by the information transmitting device provided in the advertisement medium when the transmission start information is received by the wireless receiving device.

Also, according to the present invention, the wireless transmitting device receives a starting signal transmitted by the wireless receiving device so as to transmit the advertisement type information.

Also, according to the present invention, the wireless transmitting device receives a starting signal transmitted by the wireless receiving device so as to transmit the transmission start information.

Also, according to the present invention, a solar cell is used to convert solar energy to electric energy for supplying electricity to the wireless transmitting device or the wireless receiving device.

Also, according to the present invention, the wireless transmitting device transmits the advertisement type information by electromagnetic waves or acoustic waves.

Also, according to the present invention, the wireless transmitting device transmits the transmission start information by electromagnetic waves or acoustic waves.

Also, according to the present invention, the wireless transmitting device has a function for transmitting and receiving voice/data.

### BRIEF DESCRIPTION OF THE DRAWINGS

FIG. 1 is a block diagram showing a general structure for an advertisement system according to a first embodiment of the present invention.
FIG. 2 shows construing tables 8a to 8d stored in a storing section in a server 7 of the present invention.
FIG 3 is a block diagram showing a general structure for an advertisement system according to a second embodiment of the present invention.
FIG 4 is a block diagram showing a general structure for an advertisement system according to a third embodiment of the present invention.
FIG. 5 is a block diagram showing a general structure for an advertisement system according to a fourth embodiment of the present invention.
FIG 6 is a block diagram showing a general structure for an advertisement system according to a fifth embodiment of the present invention.
FIG. 7 is an example of a portable information terminal attached in a detachable manner to a barcode reader and a barcode reading section.

### DETAILED DESCRIPTION OF THE INVENTION

### First Embodiment

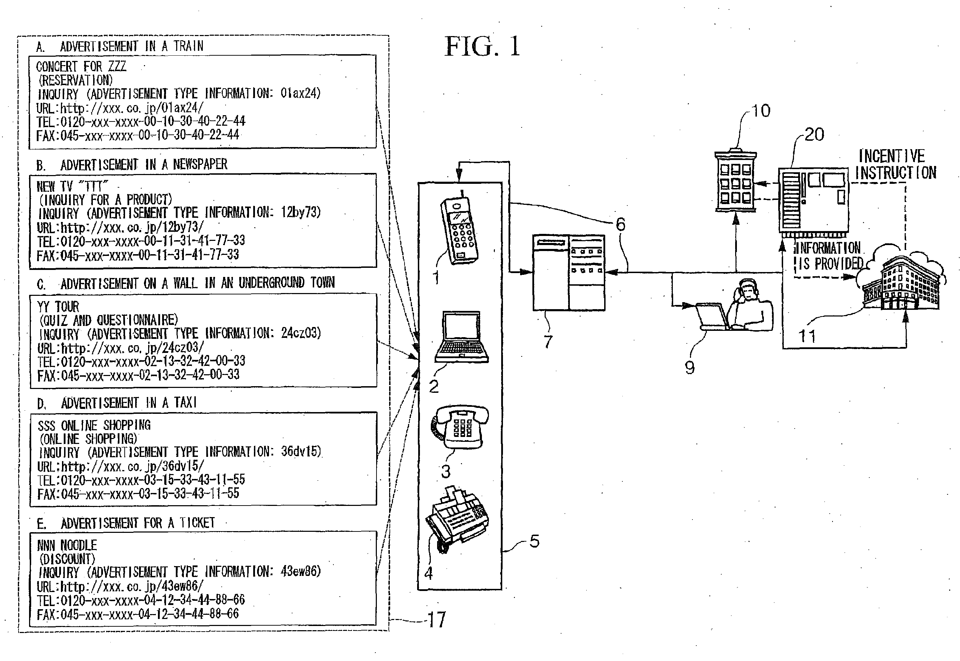

An advertisement system according to a first embodiment of the present invention is explained below with reference to drawings. FIG. 1 is a block diagram showing a general structure for an advertisement system according to the first embodiment of the present invention. In the advertisement system, a portable information terminal 1, a personal computer 2, a telephone 3, an inputting terminal 5 such as a facsimile 4, and a server 7 are connected to each other via Internet or a communication line 6. Here, it is acceptable to use a private line or a public line for the communication line. Also, it is acceptable to use various other wired or wireless communicating networks.

Also, the construing tables 8a to 8d are stored in the storing section in the server 7. The advertisement type information transmitted from the inputting terminal 5 is received by using the construing tables 8a to 8d such that the server 7 should have functions to extract an advertisement type that corresponds to a code indicated by the advertisement type information (contents in a posted advertisement, client of the advertisement, advertisement agent, and an advertising conditions), a URL (uniform resource locator) address by which it is possible to access details of the advertisement indicated by the advertisement type information, and access information such as a telephone number and a facsimile number. Consequently, the server 7 records the number of the encoded advertisement type information receipts for each type received from the inputting terminal 5. Here, the above construing tables 8a to 8d make the code indicated by the advertisement type information, the advertisement type, and access information related to each other so as to be stored therein.

Also, a computer 20 is connected to the server 7 via the Internet or the communicating line 6 so as to calculate the advertisement effect, the advertisement fees, and desirable advertisement conditions according to the number of advertisement type information receipts for per each type stored in the server 7. Thus, the advertisement effect analyzing device comprises the server 7 and the computer 20.

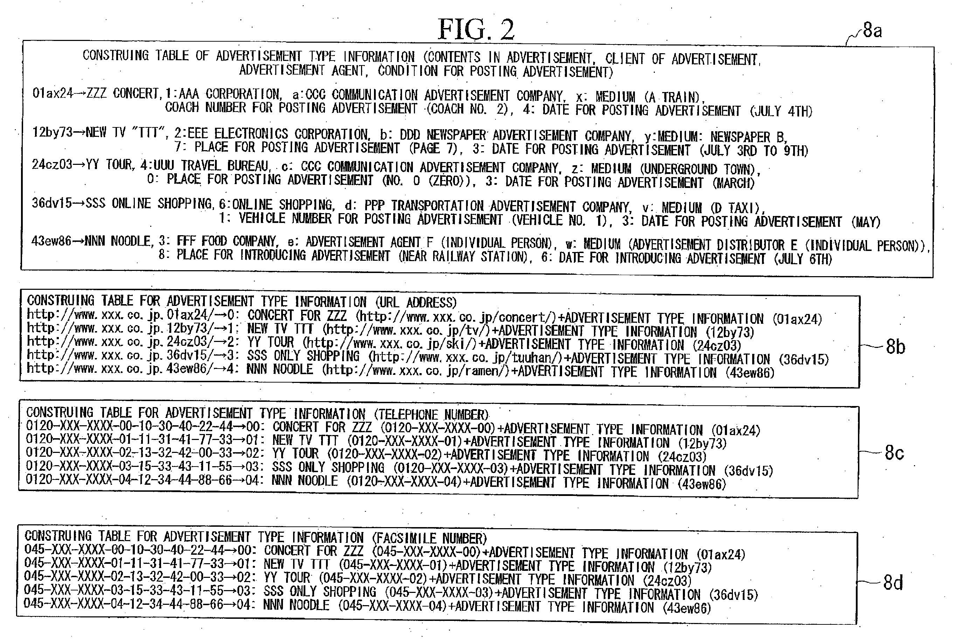

Consequently, FIG. 2 shows construing tables 8a to 8d stored in the storing section in the server 7.

Next, processes in the advertisement system of the present embodiment are explained.

For example, it is assumed that a viewer of a certain advertisement who sees an advertisement for a ZZZ concert posted in a train A is so interested in the advertisement that he or she wants to know the details of the advertised contents because the information displayed in an advertisement medium 17 is insufficient. In such a case, the viewer of the advertisement inputs access information such as a URL address "http://www.xxx.comjp/01ax24/"shown in the advertisement into the portable information terminal 1 or into the personal computer 2 so as to access the URL address. Consequently, the portable information terminal 1 or the personal computer 2 is connected to the server 7 that manages the URL address. The server 7 acknowledges that such an access is actually directed to the URL address "http://www.xxx.comjp/01ax24/" for a ZZZ concert from "0" in the advertisement type information such as "01ax24" shown in the URL address according to the construing tables 8a to 8d for construing the URL address. The server 7 transmits the URL address for the ZZZ concert to the portable information terminal 1 or the personal computer 2. By doing this, the portable information terminal 1 or the personal computer 2 can access the URL address that provides information for the details of the ZZZ concert.

Furthermore, according to the advertisement type information "01ax24" added to the URL address, it is construed that the "contents of the advertisement" are "0: ZZZ concert ", the "client of the advertisement is "1: AAA corporation", and the "advertisement agent" is "a: BBB advertisement company", and that the "conditions of the posted advertisement" are "x: medium (train A), 2: coach number in which the advertisement is posted (coach No. 2) , and 4: date for posting the advertisement (July 4th)". The number of the encoded advertisement type information receipts for per each type is counted so as to be recorded in the server 7. Here, the conditions of the posted advertisement indicate the place where the advertisement is posted and the period during which the advertisement is posted. When the viewer of the advertisement makes a reservation for a ticket for the ZZZ concert , the access information by which "the reservation" is made is recorded in the server 7. Also, it is preferable that the URL address for the "ZZZ concert" should be able to be maintained for a long period continuously by the client of the advertisement. Here, explanations are made for a case in which the server 7 stores the URL address for the "ZZZ concert". However, more importantly, it should be understood that the server 7 may transmit the URL address for the "ZZZ concert " to the portable information terminal 1 or to the personal computer 2 via the communication network by searching the URL address by the searching engine according to the "contents in the posted in the advertisement" in the encoded advertisement type information for each type when the server 7 does not store the URL address.

Also, for example, it is assumed that a viewer of a certain advertisement finds an advertisement for a new TV (television) TTT carried in a newspaper B, knows an inquiry telephone number 0120-:xxx-xxxx-01-11-31-41-77-33, and makes a phone call to the inquiry telephone number from the portable information terminal 1 or the telephone 3. In such a case, the portable information terminal 1 or the telephone 3 is connected to the server 7 at which such an inquiry phone call is supposed to reach. The server 7 acknowledges that such an access is actually directed to a telephone number 0120-xxx--xxxx for an inquiry for the "new TV TTT based on "01" in the advertisement type information "01-11-31-41-77-33" according to the construing table 8c for the telephone number. Thus, the server 7 handles the inquiry telephone number so as to be connected thereto. Therefore, the information for the new TV is provided to the viewer of the advertisement. Furthermore, according to the advertisement type information "01-11-31-41-77-33" added to the telephone number, it is construed that the "contents of the advertisement" are "01: new TV TTT", the "client of the advertisement" is "11: EEE electronics corporation", and the "advertisement agent" is "31: DDD newspaper advertisement company", and that the "conditions of the posted advertisement" are "41: medium (newspaper B), 77: place in which the advertisement is posted (page 7), and 33: date for posting the advertisement (July 3rd to 9th)". The number of receipts for each advertisement type information, indicated by a code in the advertisement type information, is counted so as to be recorded in the server 7. Here, when the viewer of the advertisement makes a "product inquiry" for the "new TV TTT", the viewer of the advertisement is connected to an operator 9, and access information for such a "product inquiry" is recorded in the server 7. Also, the server 7 records'the advertisement type information received by inputting the advertisement type information in the server 7 from the portable information terminal 1 or the telephone 3.

Similarly, for example, it is assumed that a viewer of a certain advertisement finds an advertisement for a new TV (television) TTT carried in a newspaper B, knows a facsimile number 045-xxx-xxxx-01-11-31-41-77-33, and makes an inquiry phone call from the personal computer 2 or a facsimile 4. In such a case, the personal computer 2 or the facsimile 4 is connected to the server 7 at which such an inquiry phone call is supposed to reach. The server 7 acknowledges that such an access is actually directed to a facsimile number 045-xxx-xxxx for an inquiry for the "new TV TTT based on "01" in the advertisement type information "01-11-31-41-77-33" according to the construing table 8d for the facsimile number. Thus, the server 7 handles the inquiry facsimile number so as to be connected thereto. Therefore, the information for the new TV is provided to the viewer of the advertisement via a facsimile line. Furthermore, according to the advertisement type information "01-11-31-41-77-33" added to the facsimile number, it is construed that the "contents of the advertisement" are "01: new TV TTT", the "client of the advertisement" is "11: EEE electronics corporation", and the "advertisement agent" is "31: DDD newspaper advertisement company'', and that the "conditions of the posted advertisement" are "41: medium (newspaper B), 77: place in which the advertisement is posted (page 7) , and 33: date for posting the advertisement (July 3rd to 9th)". The number of encoded advertisement type information receipts for each type is counted so as to be recorded in the server 7.

Similarly, for example, it is further assumed that a viewer of a certain advertisement finds an advertisement for a YY tour posted on a wall in an underground town C, knows an URL address http://www.xxx.co.jp/24cz03/, and accesses the URL address by using the portable information terminal 1 or the personal computer 2. In such a case, the portable information terminal 1 or the personal computer 2 is connected to the server 7 at which such an inquiry access is supposed to reach. The server 7 acknowledges that such an access is actually directed to the URL address http://www.xxx.co.jp/ski for the YY tour based on "2" in the advertisement type information "24cz03" added to the URL address according to the construing table 8b for the URL address. Thus, the server 7 transmits the URL address to the portable information terminal 1 or the personal computer 2. By doing this, the portable information terminal 1 or the personal computer 2 can access the URL address of the YY tour. Furthermore, according to the advertisement type information "24cz03" added to the URL address displayed on the advertisement posted on a wall in the underground town C, it is construed that the "contents of the advertisement" are "02: YY tour", the "client of the advertisement" is "4: UUU Travel Bureau", and the "advertisement agent" is "c: CCC communication advertisement company", and that the "conditions of the posted advertisement" are "z: medium (underground town C), 0: place in which the advertisement is posted (No. 0 (zero)) , and 33: date for posting the advertisement (March)". The number of encoded advertisement type information receipts is counted so as to be recorded in the server 7. In such a case, when a quiz and questionnaire campaign for the viewers is conducted on the advertisement, the access information such as answers from the viewers is also recoded in the server 7.

Similarly, for example, it is further assumed that a viewer of a certain advertisement finds a sticker advertisement posted in a taxi D, knows a URL address http://:www.xxx.co.jp/36dv15/, and accesses the URL address by using the portable information terminal 1 or the personal computer 2. In such a case, the portable information terminal 1 or the personal computer 2 is connected to the server 7 at which such an inquiry access for the URL address is supposed to reach. The server 7 acknowledges that such an access is actually directed to the URL address http://www.xxx.co.jp/tuuhan/ for online sales based on "3" in the advertisement type information "36dv15" added to the URL address according to the construing table 8b for the URL address. Thus, the server 7 transmits the URL address of the "online sales" to the portable information terminal 1 or the personal computer 2. By doing this, the portable information terminal 1 or the personal computer 2 can access the URL address of the SSS online sales corporation. Furthermore, according to the advertisement type information "36dv15" added to the URL address, it is construed that the "contents of the advertisement" are "03: SSS online sales'', the "client of the advertisement" is "6: SSS online sales corporation", and the "advertisement agent" is "d: PPP transportation advertisement company", and that the "conditions of the posted advertisement" are "v: medium (taxi D), 1: vehicle on which the advertisement is posted (Vehicle No. 1) , and 5: date for posting the advertisement (May)". The number of encoded advertisement type information receipts is counted so as to be recorded in the server 7. In such a case, the viewer of the advertisement purchases by using an online shopping function provided by the SSS online sales corporation, and access information such as an online shopping information provided by the viewers is also recorded in the server 7.

Furthermore , for example, it is assumed that a viewer of a certain advertisement for a ticket distributed by an advertisement distributor E (an individual person) presents the advertisement for the ticket to a shop listed on the advertisement for the ticket. In such a case, the advertisement type information (43ew86) in the advertisement for the ticket is construed according to the construing table 8a in the server in the inputting terminal 5 in the shop. According to the advertisement type information "43ew86", it is construed that the "contents of the advertisement" are "4: NNN noodles", the "client of the advertisement" is "3: FFF food company", and the "advertisement agent" is "e: advertisement agent F (an individual person)", and that the "conditions of the posted advertisement" are "w: medium (advertisement distributor E (an individual person), 8: place for distributing the advertisement (RRR railway station), and 6: date for posting the advertisement (July 6th)". The number of receipts of encoded advertisement type information is counted so as to be recorded in the server 7. Here, it is acceptable for the ticket to be a discounted ticket. Also, the advertisement agent F (an individual person) may be an advertisement agent company. Also, the advertisement agent F (an individual person) may be the same person as the advertisement distributor E (an individual person). Also, it may be acceptable for the advertisement for the ticket distributed by the advertisement distributor E (an individual person) to be printed or copied by the advertisement distributor E (an individual person) or the advertisement agent F (an individual person). Also, the "advertisement agent" and a "medium" for providing the advertisement can be not only corporation clients, but also an individual person who applies for the advertisement via various media such as the Internet.

Next, processes for calculating an advertisement effect and desirable advertising conditions by the computer 20 are explained.

The number of advertisement type information receipts for each type, indicated by a code in the advertisement type information accumulated in the server 7 via the inputting terminal 5, is transmitted to the computer 20 via the Internet or a private (or public) communication line 6. Consequently, the computer 20 calculates an advertisement effect and desirable advertising conditions according to the number of receipts for each type. For example, if an advertisement for a ZZZ concert is posted in a train A, it is assumed that the server 7 receives more than one thousand bits of encoded advertisement type information for the ZZZ concert in a month. In such a case, the computer 20 calculates the number of advertisement type information receipts indicated by encoded advertisement type for the ZZZ concert and acknowledges that more than one thousand receipts are recorded in the server 7 in a month. Thus, the computer 20 outputs a result that indicates the advertisement has substantial effect. By doing this, it is possible to determine that the advertisement effect is realized if the number of receipts for each advertisement type indicated by a code in the advertisement type information exceeds a threshold for the number of receipts.

Also, in a case in which an advertisement for a newly constructed condominium is posted in magazines such as a magazine A (from the January issue to the December issue), a magazine B (from the January issue to the December issue), a magazine C (from the January issue to the December issue), and a magazine D (from the January issue to the December issue), it is assumed that the server 7 receives the most advertisement type information for the newly constructed condominium for each type of the encoded advertisement type information in the March issues of all four magazines . In such a case, the computer 20 calculates the number of encoded advertisement type information receipts for the newly constructed condominium for each type for a year and makes statistics for the number of encoded advertisement type information receipts. Thus, according to the statistics for each month showing distribution (desirable advertisement condition ) of the number of advertisement type information receipts for the newly constructed condominium for each type, the computer 20 outputs a result that March is the most effective month to post an advertisement in magazines.

Consequently, the computer 20 outputs beneficial information for the advertisement agent 10 regarding "which generation of people needs such information" and "where the most effective advertising place is" from a future advisement strategic point of view. Consequently, the information outputted from the computer 20 is edited for a marketing plan that contains an evaluation of the advertisement effect so as to be submitted to the advertisement client 11.

Here, the computer 20 has a monitoring function by which an intentional irregular access to a particular advertisement is analyzed so as to eliminate the SPAM access that should be excluded from the evaluation.

Furthermore, the computer 20 performs a weighting operation according to the calculated advertisement effect and the desirable advertisement conditions so as to calculate an incentive (advertisement fees) that corresponds to the number of advertisement type information receipts via the inputting terminal 5. The weighting operation is performed in several steps according to the advertisement client 11 such that various aspects for posting the advertisement, from arousing the interest of the advertisement viewers to realizing an actual purchase by people who see the advertisement for the advertised product and service, are taken into consideration for the calculation. Accordingly, the advertisement client 11 pays the incentive to the advertisement agent 10 according to the evaluation for the advertisement and instructs advertisement agent 10 on future advertisement strategy.

Here, the incentive is not limited to monetary remuneration. More importantly, a membership point and a mileage point operated by the advertisement client 11 can be used for the incentive. Also, a discount advantage applicable to the product of the advertisement client 11 can be the incentive.

Furthermore, the incentive should be determined by evaluating several aspects of contributions by the advertisement agent. For example, the following three aspects can be mentioned. The first aspect is a quantitative aspect that focuses on the contribution made by the advertisement agent for supporting the business of the advertisement client from the viewpoints of speed, efficiency, and work load. The second aspect is a quality aspect that focuses on the contribution made by the advertisement agent for supporting the business of the advertisement client from the viewpoints of quality, accuracy, reliability, and effect. The third aspect is a value-creating aspect that focuses on the contribution made by the advertisement agent for supporting the business of the advertisement client from the viewpoints of market dominating power and market competitiveness.

More specifically, from the quantitative aspect, the following points are evaluated:
- whether or not the advertisement is provided speedily
- the quantity of the advertisement and access thereto
- to the extent to which the advertisement contributed to the purchase of the advertised product (did the advertisement lead to actual sales ?)

From the qualitative aspect, whether or not the advertisement is provided complaisantly and precisely is evaluated.

From the value-creating aspect, the following points are evaluated:
- whether or not attractive advertisement conditions and attractive advertisement forms are proposed
- whether or not a new product development is proposed

The more attractive "good advertisements" are posted, the more incentive the advertisement agent can obtain. Therefore; one advantage of the invention is that the advertisement agent 10 is provided positive motivation for introducing a new advertisement system. Another advantage is that the advertisement client can promote the advertisement of their product effciently for the same advertisement fee as they would incur in a conventional case.

Also, for the advertisement type information added to the URL address, it is possible to use not only numerals, but also preferable combinations of English letters and marks so as to indicate the necessary advertisement type information by allocating desirable letters. Also, in the present invention, explanations are made for a case in which the encoded advertisement type information correspondingly indicates the contents for the advertisement, the advertisement client, the advertisement agent, and the conditions for the posted advertisement. However, it is acceptable for the advertisement type information to further indicate serial numbers for the advertisement, and information. for a company for printing the advertisement.

Furthermore, it is acceptable for the server 7 to which an inquiry for the URL address for the Internet, a telephone number, and a facsimile number are transmitted to be linked to the search engine such that the server should provide the information for the inquiry such as the URL address for the Internet, a telephone number, and a facsimile number desired by the advertisement viewers concerning the information shown in the advertisement according to the advertisement type information. In such a case, it is possible to compare service and product in the present advertisement and in other advertisements by easily accessing the inquiry party; thus, it is possible to improve the quality of the advertisement.

Also, many advertisements can be used from an aesthetic point of view; thus, many viewers who see the advertisement want a copy of the advertisement. Therefore, it may be acceptable for the advertisement to be distributed free of charge or sold after posting the to whomever desires to own the advertisement among the viewers who inquired about it. Otherwise, it is acceptable for the advertisement agent 10 to conduct a campaign such as "presenting the advertisement to one thousand of people by a lottery at the advertisement agent's disposal so as to arouse the interest of the advertisement viewers in the advertised products and the advertised service shown in the advertisement. In a conventional advertisement system, advertisement operations have been entirely and integrally performed by the advertisement client 11. However, in the present advertisement system, the advertisement client can perform more effective advertisement operations by letting the advertisement agents 10 compete against each other.

### Second Embodiment

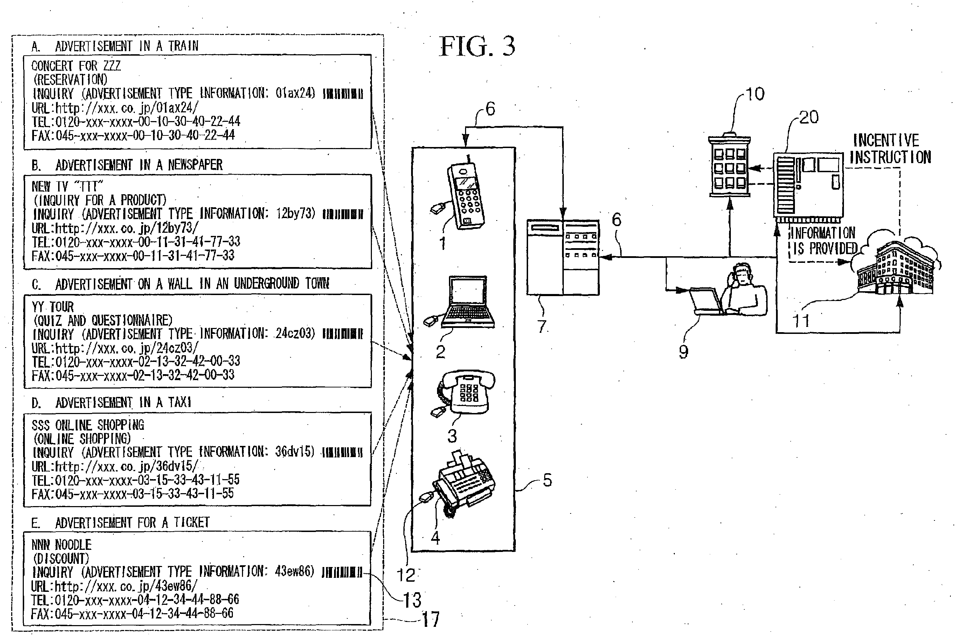

FIG. 3 is a block diagram showing a general structure for an advertisement system according to a second embodiment of the present invention. In the first embodiment, explanations were made for a case in which a key inputting operation is operated by the inputting terminal 5 under the conditions that a potable information terminal 1, a personal computer 2, a telephone 3, and a facsimile 4 are used for the inputting terminal 5 for a device for transmitting the advertisement type information to the server 7 by using the URL address, a telephone number, or a facsimile number. However, inputting the URL address, the telephone number, or the facsimile number is quite a complicated operation. Also, it can be anticipated that as a matter of course, even one error made in inputting letters will negatively affect a desirable operation.

Therefore, in the second embodiment of the present invention, the advertisement type information is represented by a barcode 13 so as to be attached to an advertisement medium 17 such that the barcode 13 can be read by a barcode reader (barcode reading section) 12 attached to the inputting terminal 5 so as to be inputted therein. By doing this, it is not necessary to type the letters via the keyboard. It is acceptable for the inputting terminal 5 to be provided with an interface circuit for the barcode reader 12 and a program for a barcode reading process such that an operation for connecting to the server can be performed automatically and serially not only by an automatic inputting operation but also by the program.

Also, in the present embodiment, it is acceptable for an inputting terminal 5 and a barcode reader 12 to be interconnected. By doing this, a viewer for the advertisement who has a portable phone 1 can obtain necessary information in the advertisement by reading out the information in a barcode by a barcode reader whenever he or she finds such an advertisement in a television program, a newspaper, or an advertisement posted in a train.

### Third Embodiment

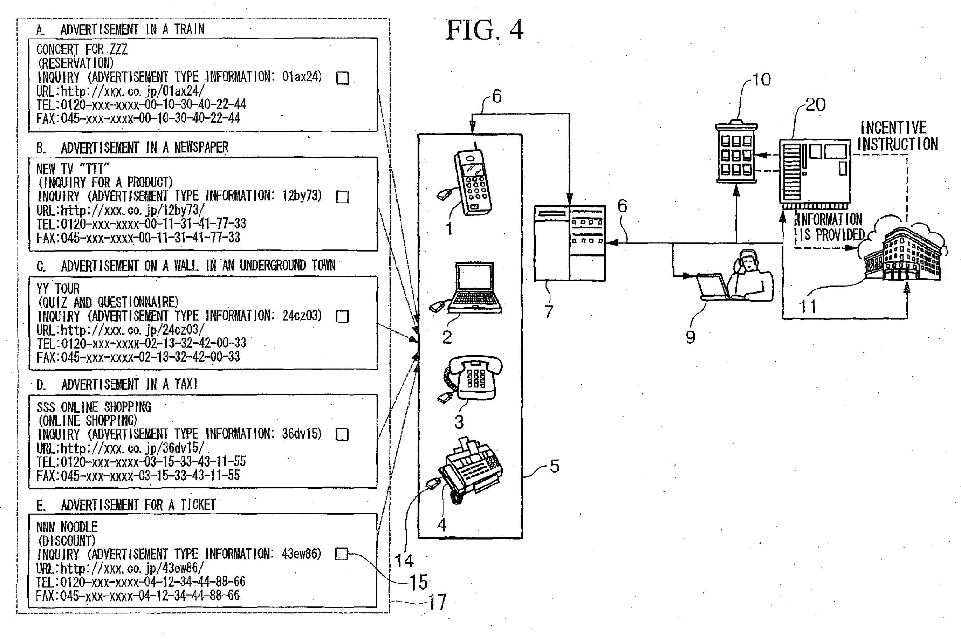

FIG. 4 is a block diagram showing a general structure for an advertisement system according to a third embodiment of the present invention. For example, there is a case in which a person may notice an advertisement in a train on his or her way to a workplace and desire more detail on the contents in the advertisement. In such a case, it is difficult to approach the advertisement in a crowded train. That is, it is difficult to read the barcode explained in the second embodiment from a certain distance so as to obtain the advertisement type information indicated by the barcode. Therefore, in the third embodiment of the present invention, a case is shown in which a wireless tag (wireless signal transmitting device) is used instead of the barcode.

The wireless tag transmits its original ID (indicator number) by a wireless communicating operation. Also, a wireless reader 14 (wireless receiving device) receives the IDs transmitted from the wireless tag so as to enable them to be read. When the wireless reader 14 approaches the advertisement, the wireless tag transmits predetermined advertisement type information to the tag reader after sensing radiowaves from the wireless reader 14 as a starting signal (otherwise, there is a wireless tag that transmits the predetermined advertisement type information to the tag reader without the starting signal). The wireless tag is often downsized by using a memory IC (integrated circuit). There are cases in which the wireless tag is called "a non-contact IC tag", "a wireless IC tag", "a non-contact IC", "a non-contact IC label", "a non-contact IC tag", and "an RF (radio frequency) IC tag".

The passive wireless tag to which electricity is supplied from the wireless reader 14 can be downsized because it is not necessary to include an energizer or a battery in the tag reader. However, the passive wireless tag cannot obtain a sufficient electricity to transmit the ID to a distant point; thus, maximum distance is from several centimeters to several ten centimeters. On the other hand, an active wireless tag provided with an energizer or a battery in the wireless tag can obtain sufficient electricity to transmit the ID to a distant point; thus, maximum distance is from several meters to several ten meters even if a weak radiowave is used. Since an active wireless tag needs an energizer or a battery, there is a problem of their running out of electricity with extended usage. To solve this problem, it is acceptable for a solar cell to be used compatibly for directly converting solar energy to electric energy so as to supply electricity. The solar cell is an element for directly converting solar energy to electric energy. For such a solar cell, a p-n junction element made of a single silicon crystal is often used. It is also acceptable for a polycrystal silicon or amorphous silicon to be used for purposes of reducing costs.

The above explanation is for the case that a wireless tag is used. However, the present invention is not limited to the case in which the wireless tag has only a transmitting function. More importantly, it is acceptable for the wireless tag to use the transmitting function in apparatuses having both transmitting and receiving functions such as a portable telephone that can transmit and receive voice and data.

Also, it is possible to use any desirable electromagnetic waves in wireless communication including infrared rays, ultrasonic waves, and audible sound waves for a carrier for signals transmitted and received between the wireless tag and the wireless reader 14. In the present specification, it should be understood that "sound waves" means ultrasonic waves and audible waves. It is acceptable for the carrier for the starting signal transmitted from the wireless reader 14 to be the same as the carrier for the indicator signal transmitted by the wireless tag. Also, it is acceptable for the carrier for the starting signal transmitted from the wireless reader 14 to be different from the carrier for the indicator signal transmitted by the wireless tag.

For such a wireless tag, it is particulaxly preferable to use an infrared ray IC tag. Infrared rays have high directivity; thus, there is virtually no possibility that crosstalk will occur. By using such an infrared ray wireless tag, it is possible to read the barcode shown in the second embodiment of the present invention from a certain distant point without approaching the advertisement in a crowded train. By doing this, the viewers of the advertisement can obtain the desired advertisement type information reliably; thus, it is possible to realize more desirable advertisement effect.

In addition, the wireless tag provided in the advertisement medium 17 transmits the ID that indicates the advertisement type information; thus, the inputting terminal 5 provided with the wireless reader 14 receives the ID. The inputting terminal 5 transmits the advertisement type information indicated by the received ID to the server 7 according to an instruction by the viewer of the advertisement.

Also, in the present embodiment, it is acceptable for an inputting terminal 5 and a wireless reader 14 to be interconnected. Furthermore, in the present invention, it is possible to use a wireless reader 14 that uses an infra red rays. By using a wireless reader 14 that uses an infra red rays, it is possible to obtain information in a distant advertisement as if the viewer were using a remote controller; thus, it is possible to enhance an acknowledgement for the information in the advertisement over the case in which a wireless reader uses a wireless tag.

### Fourth Embodiment

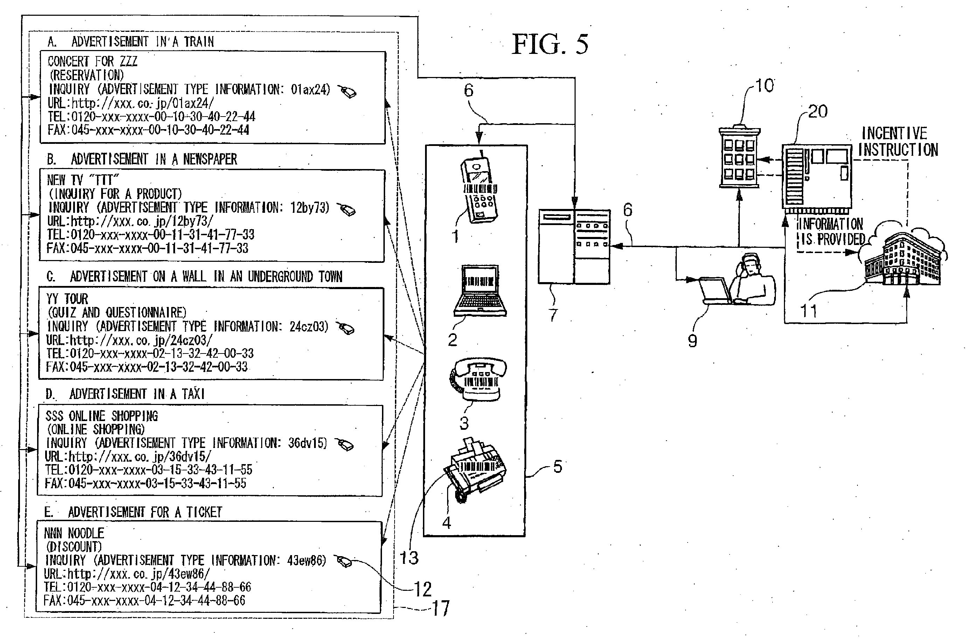

FIG. 5 is a block diagram showing a general structure for an advertisement system according to a fourth embodiment of the present invention. In the third embodiment of the present invention, inputting operation via a keyboard is not necessary, because the advertisement type information is represented by a barcode 13 so as to be attached to an advertisement medium 17, and the barcode 13 is read by a barcode reader 12. In contrast, in the case shown in FIG. 5, contact information such as an e-mail address for the inputting terminal 5, a telephone number, and a facsimile number are inputted in the barcode 13 so as to be attached to the inputting terminal 5. Thus, the contact information is loaded by the barcode reader 12 provided in the advertisement medium 17. Also, an information transmitting device and a storing device for the advertisement type information are provided in the advertisement medium 17. Consequently, the contact information that the information transmitting device reads by using the barcode reader 12 and the advertisement type information stored in the storing device are transmitted to the server at which an inquiry is supposed to reach via the Internet or the communicating line 6. Here, the storing device provided in the advertisement medium 17 for storing the advertisement type information is a small device such as a semiconductor memory. By using such a small storing device, it is not necessary to input the advertisement type information into the inputting terminal 5 by using a keyboard. Furthermore, it is possible to realize a smaller inputting terminal 5 as compared to the case of the second embodiment. Accordingly, the server 7 receives the advertisement type information transmitted from the information transmitting device provided in the advertisement medium 17 so as to notify access information (such as a URL) that notifies the details of the contents of the encoded advertisement type information to the inputting terminal 6 by using the contact information.

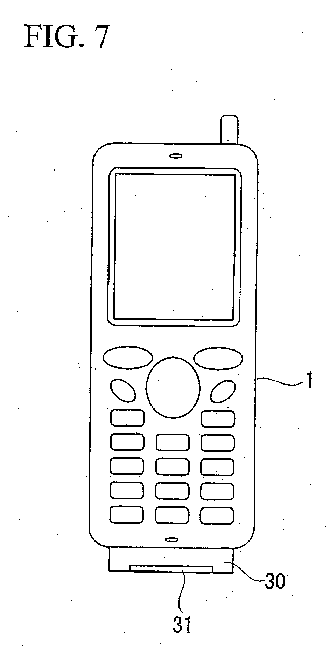

In the second embodiment and the fourth embodiment, an explanation was made for a case in which the barcode reader 12 is connected to the inputting terminal 5 under a wired condition. However, the present invention is not limited to such a structure. That is, as shown in FIG. 7, the following structure is acceptable in which a two-dimension al barcode reader 30 having a barcode reading section 31 is attached in a detachable manner to an end section of a portable information terminal 1 as an inputting device 5 so as to enable the barcode to be read. By doing this, the portability of the portable telephone is not as degraded as in the case in which the barcode reader is connected to the portable information terminal 1 under a wired condition. If a viewer of a certain advertisement has such a portable information terminal 1, the viewer of the advertisement can obtain necessary advertisement type information by reading the barcode by the barcode reader attached to the portable information terminal 1 directly at any time he or she finds an advertisement in a TV program, a newspaper, or an advertisement in the train. Therefore, it is possible to obtain more of the advertisement type information that has been conventionally difficult to be understood quantitatively; thus, it is possible to utilize the information in public displays of the advertisement. Therefore, it is possible to understand the advertisement effect on the viewers quantitatively.

### Fifth Embodiment

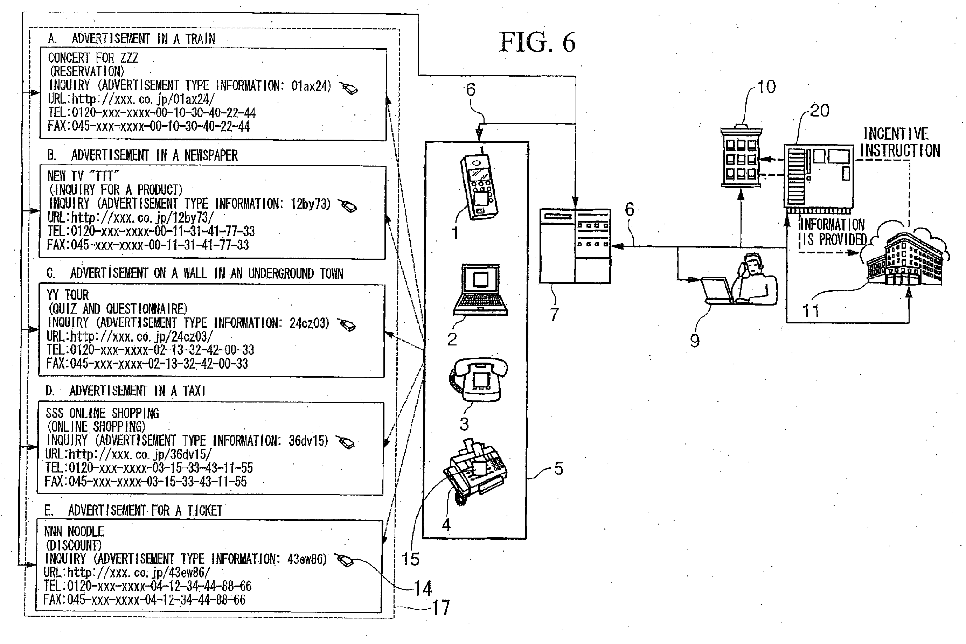

FIG. 6 is a block diagram showing a general structure for an advertisement system according to a fifth embodiment of the present invention. In the fourth embodiment of the present invention, inputting operation via a keyboard is not necessary, because the wireless tag 15 that transmits the advertisement type information is provided in the advertisement medium 17 so as to enable the contents in the wireless tag 15 to be read by the wireless reader 14 included in the inputting terminal 5. In contrast, in the case shown in FIG. 6, contact information such as an e-mail address for the inputting terminal 5, a telephone number, and a facsimile number are inputted in the wireless tag 15 so as to be attached to the inputting terminal 5. Thus, the contact information is loaded by the wireless reader 14 provided in the advertisement medium 17. Also, an information transmitting device and a storing device for the advertisement type information are provided in the advertisement medium 17. Consequently, the contact information that the information transmitting device reads by using the wireless reader 14 and the advertisement type information stored in the storing device are transmitted to the server at which an inquiry is supposed to reach via the Internet or the communicating line 6. Here, the storing device included in the advertisement medium 17 for storing the advertisement type information is a small device such as a semiconductor memory. By using such a small storing device, it is not necessary to input the advertisement type information into the inputting terminal 5 by using a keyboard. Furthermore, it is possible to realize a smaller inputting terminal 5 than in the case of the fourth embodiment. Accordingly, the server 7 receives the advertisement type information transmitted from the information transmitting device included in the advertisement medium 17 so as to notify access information (such as a URL) that notifies the details of the contents of the encoded advertisement type information to the inputting terminal 6 by using the contact information.

Here, the present invention is not limited to the above embodiments. That is, the present invention can be realized by modifying the structure and/or operation in the above embodiments, and furthermore upgrading the functions in the above embodiments.

Also, processes in the above server 7, the inputting terminal 5, the computer 20, and the information transmitting device are recorded in a program format in a computer-readable recording medium. The above processes are performed by reading the program by a processing section such as a CPU (central processing unit). Here, a computer-readable recording medium means a magnetic disk, an optical magnetic disk, a CD-ROM, a DVD-ROM, or a semiconductor memory. Also, it is acceptable for such a computer program to be distributed to the computer via the communicating line such that the computer that receives s the computer program executes the program.

As explained above, according to the present invention, the terminal transmits the encoded advertisement type information, and the advertisement effect analyzing device receives the advertisement type information from the terminal and stores the number of encoded advertisement type information receipts. Consequently, the advertisement effect analyzing device calculates the advertisement effect according to the number of receipts, and calculates the advertisement fees according to the calculated advertisement effect.

By doing this, the advertisement effect analyzing device receives information that indicates that the viewer acknowledged the advertisement directly from the viewers in a case in which the advertisement fees are calculated according to information other than the program rating, the number of subscribers, and the number of passengers that can specify the number of the viewers. Therefore, it is possible to calculate the advertisement effect quantitatively. Also, it is possible to calculate the incentive according to the increase in the viewers of the advertisement. Also, it is possible to calculate preferable conditions for posting the advertisement because it is possible to understand the advertisement type that the viewer acknowledged.

Also, according to the present invention, the advertisement effect analyzing device identifies the type of contents in the advertisement based on the encoded advertisement type information received in a receiving process according to the advertisement type information construing table that stores the encoded advertisement type information and the access information. Thus, the advertisement effect analyzing device transmits the contents in the advertisement to the search engine. Consequently, the advertisement effect analyzing device receives the information concerning the contents in the advertisement from the search engine so as to transmit the relevant contents in the advertisement to the terminal. By doing this, the server 7 to which an inquiry for the URL address in the Internet, the telephone number, and the facsimile number reaches is linked to the search engine. Thus, the server 7 provides inquiry information such as the URL address in the Internet, the telephone number, and the facsimile number relevant to the information shown in the advertisement that is desired by the viewer of the advertisement according to the advertisement type information. Therefore, it is possible to compare the service/product in the advertisement and the service/product in other advertisements easily by accessing such inquiry information. Thus, it is possible to enhance the function of the advertisement.

Also, according to the present invention, the terminal is provided with a barcode reading section, and the terminal reads the barcode information that indicates the advertisement type information by using the barcode reading section. By doing this, the advertisement type information is represented by a barcode 13 so as to be attached to an advertisement medium 17 such that the barcode 13 can be read by a barcode reader 12 provided in to the inputting terminal 5 so as to be inputted therein. By doing this, it is not necessary to type in letters via a keyboard. Also, if an interface circuit for the barcode reader 12 and an exclusive program for reading the barcode are provided in the inputting terminal 5, it is possible not only to input automatically but also connect to the server in a serial manner continuously by the program.

Also, according to the present invention, the wireless transmitting device included in the advertisement medium transmits the advertisement type information by wireless communication, and the wireless receiving device included in the terminal receives the advertisement type information. By doing this, it is possible to read the ID transmitted from the wireless transmitting device included in the advertisement from a certain distance without approaching the advertisement in a crowded train in a case in which a viewer finds an advertisement in a train on his or her way to the workplace and wants to know the details of the advertisement because he or she is interested therein; thus, it is possible to obtain the advertisement type information indicated by the ID.

Also, according to the present invention, when the information transmitting device included in the advertisement transmits the advertisement type information stored in the storing section and the advertisement effect analyzing device receives the advertisement type information from the information transmitting device, the information transmitting device is provided with a barcode reading section; thus, the information transmitting device reads the barcode information displayed on the terminal by using the barcode reading section. Consequently, the advertisement type information stored in the' storing section is transmitted to the terminal when the barcode information is read by the advertisement effect analyzing device. By doing this, as compared with the second embodiment, it is not necessary to type in the letters via the keyboard in the inputting terminal 5. In addition, it is possible to downsize the inputting terminal 5.

Also, according to the present invention, when the information transmitting device transmits the advertisement type information stored in the storing section and the advertisement effect analyzing device receives the advertisement type information from the information transmitting device, the wireless transmitting device included in the terminal transmits the transmission start information by wireless communication, and the wireless receiving device included in the advertisement medium receives the transmission start information. Consequently, the information transmitting device included in the advertisement medium transmits the advertisement type information stored in the storing section when the wireless receiving device receives the transmission start information. By doing this, as compared with the third embodiment, it is not necessary to type in the advertisement type information via the keyboard in the inputting terminal 5. In addition, it is possible to downsize the inputting terminal 5.

Also, according to the present invention, a solar cell is used for converting solar energy to electric energy for supplying electricity to the wireless transmitting device or the wireless receiving device. By doing this, it is possible to solve the problem of the wireless transmitting device and the wireless receiving device running out of electricity with extended usage.

## Claims

1. A method for analyzing the effect of an advertisement in an advertisement system provided with terminals and an advertisement effect analyzing device comprising the steps for:
transmitting information pertaining to encoded advertisement type information;
receiving the encoded advertisement type information from the terminals in the advertisement effect analyzing device;
storing the number of encoded advertisement type information receipts for each type in the advertisement effect analyzing device;
calculating the advertisement effect based on the number of encoded advertisement type information receipts in the advertisement effect analyzing device; and
calculating advertisement fees based on the calculated advertisement effect in the advertisement effect analyzing device.

2. Amethod for analyzing the effect of an advertisement in an advertisement system provided with an information transmitting device with a storing section for encoded advertisement type information, terminals, and an advertisement effect analyzing device, comprising the steps for:
transmitting information pertaining to the encoded advertisement type information stored in the storing section by the information transmitting device;
receiving the encoded advertisement type information from the information transmitting device by the advertisement effect analyzing device;
storing the number of encoded advertisement type information receipts for each type in the advertisement effect analyzing device;
calculating the advertisement effect based on the number of encoded advertisement type information receipts in the advertisement effect analyzing device; and
calculating advertisement fees based on the calculated advertisement effect in the advertisement effect analyzing device.

3. A method for analyzing the effect of an advertisement according to Claim 1 further comprising the step of calculating preferable conditions for posting the advertisement according to the effect of the previous advertisement and the advertisement fees.

4. A method for analyzing the effect of an advertisement according to Claim 1 further comprising the steps of:
reading out a type of contents in the advertisement type information that corresponds to the encoded advertisement information received in the above receiving step by the advertisement effect analyzing device from an advertisement type information construing table in which an information type that corresponds to the encoded advertisement type information and access information are stored;
transmitting the contents in the advertisement to a search engine by the advertisement effect analyzing device;
receiving information concerning the contents in the advertisement from the search engine by the advertisement effect analyzing device; and
transmitting the information concerning the contents in the advertisement to the terminals by the advertisement effect analyzing device.

5. A m method for analyzing the effect of an advertisement using a barcode reading section in the terminals according to Claim 1, the terminals comprising a barcode reading section, and further comprising the step of reading barcode information that indicates the advertisement type information by the barcode reading section in the terminals.

6. A method for analyzing the effect of an advertisement according to Claim 1 further comprising the step of:
transmitting the advertisement type information by wireless communication by a wireless transmitting device provided in an advertisement medium;
and
receiving the advertisement type information by a wireless receiving device provided in the terminals.

7. A method for analyzing the effect of an advertisement using a barcode reading section in the information transmitting device according to Claim 2, further comprising the steps of:
reading the barcode information displayed in the terminals by the barcode reading section in the information transmitting device; and
transmitting the advertisement type information stored in the storing section when the barcode is read.

8. A method for analyzing the effect of an advertisement according to Claim 2, further comprising the steps of:
transmitting transmission start information by wireless communication by the wireless communicating device provided in the terminals;
receiving the transmission start information by the wireless communicating 'device provided in the advertisement medium; and
transmitting the advertisement type information stored in the storing section by the information transmitting device provided in the advertisement medium when the transmission start information is received by the wireless receiving device.

9. Am method for analyzing the effect of an advertisement according to Claim 6 wherein the wireless transmitting device receives a starting signal transmitted by the wireless receiving device so as to transmit the advertisement type information.

10. A m method for analyzing the effect of an advertisement according to Claim 8 wherein the wireless transmitting device receives a starting signal transmitted by the wireless receiving device so as to transmit the transmission start information.

11. Am method for analyzing the effect of an advertisement according to Claim 6 wherein a solar cell is used for converting solar energy to electric energy for supplying electricity to the wireless transmitting device or the wireless receiving device.

12. A method for analyzing the effect of an advertisement according to Claim 6 wherein the wireless transmitting device transmits the advertisement type information by electromagnetic waves or acoustic waves.

13. Am method for analyzing the effect of an advertisement according to any one of Claims 8 to 10 wherein the wireless transmitting device transmits the transmission start information by electromagnetic waves or acoustic waves.

14. Am method for analyzing the effect of an advertisement according to any one of Claims 6 and 8 to 13 wherein the wireless transmitting device has a function for transmitting and receiving voice and data.
